# EUROPEAN PATENT SPECIFICATION

(11) **EP 4 333 634 B1**
(45) Date of publication and mention of the grant of the patent: **06.08.2025**
(21) Application number: 22726513.9
(22) Date of filing: 04.05.2022
(51) Int. Cl.: A23G 3/36, A23L 5/41, A23G 1/32

(54) **CONFECTIONERY PRODUCT**
KONFEKTPRODUKT
PRODUIT DE CONFISERIE

(30) Priority: 06.05.2021 IT 202100011609
(43) Date of publication of application: 13.03.2024
(73) Proprietor: Perfetti Van Melle S.p.A., 20045 Lainate (MI) (IT)
(72) Inventor: HOEKSEMA, René, 6136 KT Sittard (NL); LIZANO IGLESIAS, Joaquin Antonio, 6136 KT Sittard (NL); MARANGOZ, Güven, 6136 KT Sittard (NL); BROUNS, Gladys, 6136 KT Sittard (NL)
(74) Representative: Bianchetti & Minoja with Trevisan & Cuonzo IPS SRL
(86) International application number: PCT/IB2022/054094
(87) International publication number: WO 2022/234464

(56) References cited:
- WO-A1-2011/151494
- CN-A- 109 007 202
- CN-C- 100 379 350
- US-A1- 2007 154 592
- US-A1- 2012 321 750
- ANONYMOUS: "Essential Guide to Food Additives - Google Books", 1 August 2019 (2019-08-01), XP055945304, Retrieved from the Internet <URL:https://books.google.nl/books?id=57arDwAAQBAJ&pg=PA133&lpg=PA133&dq=lactic+acid+inhibit+browning+confectionery&source=bl&ots=ELMokcxQke&sig=ACfU3U2-44XlvOXugKw60Yl8I382DR_5Vw&hl=en&sa=X&ved=2ahUKEwjF54CHioz5AhWQQPEDHWYUAoYQ6AF6BAgeEAM#v=onepage&q=lactic%20acid%20inhibit%20browning%20confectionery&f=> [retrieved on 20220722]

## Description

### Field of invention

The object of the invention is a confectionery product consisting of a single- or multilayer tablet containing one or more active ingredients liable to cause browning of the product as a side effect, and an amount of lactic acid able to prevent said browning.

### PRIOR ART

Numerous ingredients used in the food and nutraceutical fields present the drawback of causing the formulations containing them to turn brown. The result is discolouration of the formulation, and the appearance of colours which are disliked by consumers. Most examples of such ingredients are substances with a phenol or polyphenol structure which are liable to oxidation, such as condensed tannins, proanthocyanidins, procyanidins, catechins, epicatechins, curcuminoids and phenolic aldehydes. Said ingredients are widely used in the food and confectionery industries as colourings, flavourings, preservatives, antiseptics and antioxidants.

Vanillin, a well-known flavouring, and epigallocatechin gallate, significant amounts of which are contained in green tea in particular, are among the most common ingredients used in the food industry which are responsible for color alterations of the products containing them.

For example, CN 106880048 describes confectionery products containing ingredients derived from green tea, made in candy, chewing gum or tablet form.

AU2002243023 describes oral compositions for the treatment of oral cavity diseases comprising plant extracts, including green tea, in combination with lactobacilli.

EP2162013 describes chewing gum in the form of tablets comprising encapsulated active ingredients, among which green tea extract is listed. Food acids, which are ingredients commonly used in this type of formulation, may also be present.

US 2012/321750 A1 disclosesa two-shell egg with a chocolate layer and a second marshmallow layer. In the marshmallow composition, lactic acid is present among many other ingredients.

Acids such as citric, lactic, tartaric, malic and similar acids are often used in the confectionery industry as flavour enhancers, acidifiers and pH adjusters. However, there is no evidence that said acids have ever been considered as agents able to prevent color alterations of compositions due to the presence of ingredients like vanillin.

### DESCRIPTION OF THE INVENTION

The present invention is defined by the claims.

The present invention discloses a confectionery product in form of tablets, comprising at least one active ingredient liable to cause browning of the product, belonging to the class of condensed tannins, proanthocyanidins, procyanidins, catechins, epicatechins, curcuminoids and vanillin, said active ingredients being present in amounts ranging from 0.03% to 5% by weight, and lactic acid in a percentage ranging from 0.2 to 0.3% of the total weight of the product.

The present invention also discloses use of lactic acid to inhibit browning of confectionery products comprising condensed tannins, proanthocyanidins, procyanidins, catechins, epicatechins, curcuminoids and vanillin.

It has now been discovered that lactic acid, in the amount of 0.2 to 0.3 % by weight of the total composition, effectively prevents browning and color alterations over time caused by the presence of compounds such as vanillin, green tea polyphenols, in particular epigallocatechin gallate, or other active ingredients (used, for example, as flavourings, antioxidants, or for their beneficial effects in general) which have the undesirable effect of altering the colour of the product with time.

The object of the invention is therefore a confectionery product in form of a tablet, comprising at least one active ingredient liable to cause the undesirable effect of browning of the product, and lactic acid in a percentage ranging between 0.2 and 0.3% of the total weight of the product.

The lactic acid according to the invention can be used in the form of a granulate, a liquid, in solution, pure or mixed with the salts thereof or with carriers, diluents and excipients.

Active ingredients liable to cause browning typically include condensed tannins, proanthocyanidins, procyanidins, catechins, epicatechins, curcuminoids and phenolic aldehydes.

The active ingredients most commonly used are epigallocatechin gallate and vanillin. Vanillin is a widely used flavouring, while green tea polyphenols, the most representative of which is epigallocatechin gallate, are used in the health and nutraceutical fields due to their beneficial properties, in particular their antioxidant and antiseptic properties. The amounts of said ingredients in the compositions according to the invention are those commonly used in known products containing said ingredients, and normally range between 0.03% and 5% by weight, more preferably between 0.05% and 1.5%.

For example, epigallocatechin gallate, which is useful in breath-freshening products, can be present in amounts ranging from 0.05 to 5% by weight.

The compositions according to the invention will also contain conventional excipients and carriers such as sweeteners, flavourings, colourings and lubricants.

The anti-browning effect discovered for lactic acid is not shared by other acids commonly used in the food industry, as demonstrated by the following examples.

### Example 1

A basic mixture was prepared as described in Table 1, to which citric acid, malic acid and lactic acid were added. The amounts of acid added in the various tests were 0.2%, 0.5%, 1%, 2%, 3% and 4% of the total weight of the product. A reference sample not containing acids was also prepared.

A commercially available tablet press, model Korsch XP-1, was used to make all the samples tested. The tablets thus made were packaged in a tin and placed in the climatic chamber (relative humidity 35°C and 70%).

**TABLE 1 - composition of basic mixture**

| Ingredient | % |
|---|---|
| Sorbitol | 98.48 |
| Acesulfame K | 0.15 |
| Sucralose | 0.05 |
| Flavourings | 0.5 |
| Magnesium stearate | 0.5 |
| Green tea extract EGCG | 0.25 |
| Colouring E102 in aluminium lacquer | 0.05 |
| Colouring E129 in aluminium lacquer | 0.02 |

The results demonstrate that the acid-free reference sample turns brown by the 17th day.

The use of acid in the amount of 3% and 4% by weight of the product prevents the tablet from turning brown, but gives rise to organoleptic alterations in the product, namely a deterioration in flavour inconsistent with the quality objectives of the desired product.

The use of acid in the amount of 0.2%, 0.5%, 1% and 2% either does not entirely prevent the product from turning brown, or causes stains or perforations of the surface of the product which unacceptably affects its quality, except for lactic acid.

The tablets made with lactic acid in the latter amounts do not turn brown, do not exhibit unacceptable stains or perforations, and do not exhibit any organoleptic alteration disliked by consumers.

### Example 2

Products containing EGCG, vanillin or both were prepared. Table 2 shows the experimental tests conducted.

**TABLE 2 - composition of samples containing vanillin green tea or both**

| | EGCG + vanillin | EGCG | Vanillin | Reference sample (base) | EGCG + lactic acid | EGCG + vanillin + lactic acid | Vanillin + lactic acid |
|---|---|---|---|---|---|---|---|
| Ingredient | % | | | | | | |
| Sorbitol | 98.04 | 98.19 | 98.29 | 98.44 | 97.99 | 97.84 | 98.24 |
| Sucralose | 0.05 | 0.05 | 0.05 | 0.05 | 0.05 | 0.05 | 0.05 |
| Acesulfame K | 0.15 | 0.15 | 0.15 | 0.15 | 0.15 | 0.15 | 0.15 |
| Magnesium stearate | 0.5 | 0.5 | 0.5 | 0.5 | 0.5 | 0.5 | 0.5 |
| E133 colouring | 0.009 | 0.009 | 0.009 | 0.009 | 0.009 | 0.009 | 0.009 |
| Spray-dried mint flavouring | 0.15 | 0.15 | 0.15 | 0.15 | 0.15 | 0.15 | |
| Mint flavouring in liquid form | 0.7 | 0.7 | 0.7 | 0.7 | 0.7 | 0.7 | 0.7 |
| Green tea extract, EGCG | 0.25 | 0.25 | | | 0.25 | 0.25 | |
| Vanillin | 0.15 | | 0.15 | | | 0.15 | 0.15 |
| Lactic acid | | | | | 0.2 | 0.2 | 0.2 |

The shelf-life tests conducted on the products listed in Table 2 clearly demonstrate browning of the tablets containing EGCG and/or vanillin. The tablets not containing EGCG or vanillin did not exhibit any browning. In the case of both tablets containing both EGCG and vanillin, a clear difference was observed between the tablets with and without 0.2% powdered lactic acid.

The products not containing vanillin but containing EGCG and lactic acid, and the product not containing EGCG but containing vanillin and lactic acid, maintain their original colour, and no change of colour is observed by comparison with the reference samples.

The addition of 0.2% lactic acid to the tablets containing EGCG, vanillin or a combination thereof significantly improved the stability of the colour. The colour of the tablets substantially corresponds to the base.

The shelf tests were conducted at 40°C; 50/80% RH for 27 days, with checks on the degree of browning after 3, 10, 17 and 27 days.

In addition to the benefit of the anti-browning effect on the product, it was observed that the use of lactic acid according to the invention did not cause any alteration in the flavour of the product.

Sensory tests conducted on product samples made with lactic acid demonstrated that the panel of tasters was unable to perceive any change in flavour compared with the product made without the use of lactic acid.

It was also found that said absence of alteration in flavour in the compositions containing lactic acid applied not only to products containing an acid fraction, such as fruit-flavoured products, but also to products such as those with mint flavouring.

Said finding has important repercussions in terms of optimisation of manufacturing processes, allowing the same base to be used, regardless of the type of flavouring employed.

Sensory tests were therefore also conducted on product samples made with lactic acid and mint flavouring, and the result was the same as for the tests conducted on fruit-flavoured products.

## Claims

1. A confectionery product in form of tablets, comprising at least one active ingredient liable to cause browning of the product, belonging to the class of condensed tannins, proanthocyanidins, procyanidins, catechins, epicatechins, curcuminoids and vanillin, said active ingredients being present in amounts ranging from 0.03% to 5% by weight, and lactic acid in a percentage ranging from 0.2 to 0.3% of the total weight of the product.

2. A confectionery product according to claim 1 wherein the active ingredient is epigallocatechin gallate or vanillin.

3. A confectionery product according to claim 1 or 2 wherein the active ingredient is epigallocatechin gallate.

4. A confectionery product according to claim 2 or 3 wherein the vanillin or epigallocatechin gallate is present in a percentage ranging between 0.03 and 5%.

5. The use of lactic acid to inhibit browning of confectionery products comprising condensed tannins, proanthocyanidins, procyanidins, catechins, epicatechins, curcuminoids and vanillin.

## Patentansprüche

1. Süßwarenprodukt in Form von Tabletten, umfassend mindestens einen Wirkstoff, der geeignet ist, eine Bräunung des Produkts zu bewirken, und der zur Klasse der kondensierten Tannine, der Proanthocyanidine, der Procyanidine, der Catechine, der Epicatechine, der Curcuminoide und des Vanillins gehört, wobei die Wirkstoffe in Mengen zwischen 0,03 und 5 Gew.-% vorhanden sind, und Milchsäure in einem Prozentsatz zwischen 0,2 und 0,3% des Gesamtgewichts des Produkts.

2. Süßwarenprodukt nach Anspruch 1, wobei der Wirkstoff Epigallocatechingallat oder Vanillin ist.

3. Süßwarenprodukt nach Anspruch 1 oder 2, wobei der Wirkstoff Epigallocatechingallat ist.

4. Süßwarenprodukt nach Anspruch 2 oder 3, wobei das Vanillin oder Epigallocatechingallat in einem Prozentsatz zwischen 0,03 und 5% vorhanden ist.

5. Die Verwendung von Milchsäure zur Verhinderung der Bräunung von Süßwaren, die kondensierte Tannine, Proanthocyanidine, Procyanidine, Catechine, Epicatechine, Curcuminoide und Vanillin enthalten.

## Revendications

1. Produit de confiserie sous la forme de comprimés, comprenant au moins un ingrédient actif susceptible de provoquer le brunissement du produit, appartenant à la classe des tanins condensés, des proanthocyanidines, des procyanidines, des catéchines, des épicatéchines, des curcuminoïdes et de la vanilline, lesdits ingrédients actifs étant présents en des quantités dans la plage de 0,03 % à 5 % en poids, et de l'acide lactique en un pourcentage situé dans la plage de 0,2 à 0,3 % du poids total du produit.

2. Produit de confiserie selon la revendication 1, l'ingrédient actif étant le gallate d'épigallocatéchine ou la vanilline.

3. Produit de confiserie selon la revendication 1 ou 2, l'ingrédient actif étant le gallate d'épigallocatéchine.

4. Produit de confiserie selon la revendication 2 ou 3, la vanilline ou le gallate d'épigallocatéchine étant présent en un pourcentage situé dans la plage entre 0,03 et 5 %.

5. Utilisation d'acide lactique pour l'inhibition du brunissement de produits de confiserie comprenant des tanins condensés, des proanthocyanidines, des procyanidines, des catéchines, des épicatéchines, des curcuminoïdes et de la vanilline.
